Europäisches Patentamt

European Patent Office

Office européen des brevets

(19)

(11) **EP 1 450 350 A1**

(12) **EUROPEAN PATENT APPLICATION**

(43) Date of publication:
   **25.08.2004 Bulletin 2004/35**

(51) Int Cl.⁷: **G10L 15/18**, G10L 15/16

(21) Application number: **03003876.4**

(22) Date of filing: **20.02.2003**

(84) Designated Contracting States:
   **AT BE BG CH CY CZ DE DK EE ES FI FR GB GR
   HU IE IT LI LU MC NL PT SE SI SK TR**
   Designated Extension States:
   **AL LT LV MK RO**

(71) Applicant: **Sony International (Europe) GmbH
   10785 Berlin (DE)**

(72) Inventors:
   • **Valsan, Zica, c/o Stuttgart Technology Center
     Hedelfinger Strasse 61, 70327 Stuttgart (DE)**
   • **Emele, Martin, c/o Stuttgart Technology Center
     Hedelfinger Strasse 61, 70327 Stuttgart (DE)**

(74) Representative: **Müller - Hoffmann & Partner
   Patentanwälte,
   Innere Wiener Strasse 17
   81667 München (DE)**

(54) **Method for Recognizing Speech with attributes**

(57)    The present invention relates to a method for recognizing speech, which method leads to an improved recognition rate compared to prior art. Within the method a language model is applied which is based on attribute information of a word, which is descriptive for syntactic and/or semantic information and/or the like of the respective word. The method for recognizing speech according to the invention, comprises the steps of receiving (S0) a speech input (SI), generating (S1) a set of ordered hypotheses (OH), wherein each hypothesis contains at least one hypothesis word, generating (S2) attribute information (AI) for at least one of said at least one hypothesis word, the attribute information being generated to be descriptive for syntactic and/or semantic information and/or the like of the respective hypothesis word, using (S3) a language model (LM) which is based on said attribute information (AI) to calculate word probabilities for said at least one of said at least one hypothesis word, which word probabilities are descriptive for the posterior probabilities of the respective hypothesis word given a plurality of previous hypothesis words, using (S4) said word probabilities for generating a set of re-ordered hypotheses (ROH), choosing (S5) at least one best hypothesis (BH) from said set of re-ordered hypotheses (ROH) as a recognition result (RR), and outputting (S6) said recognition result.

Speech input SI

SI —

OH —

OH, AI —

WP, OH, AI —

WP, ROH, AI —

RR —

| Receive speech input SI | S0 |
| Generate a set of ordered hypotheses OH | S1 |
| Generate attribute information AI | S2 |
| Calculate word probabilities WP | S3 |
| Re-order set of ordered hypotheses OH | S4 |
| choose best hypothesis BH as recognition result RR | S5 |
| output recognition result RR | S6 |

recognition result RR

Fig. 1

**EP 1 450 350 A1**

**Description**

The invention relates to a method for recognizing speech.

In automatic speech recognition (ASR) standard language models are generally used to improve the recognition rate. Almost all state of the art systems use statistical $n$-gram standard language models that assume that the prior probability of a spoken word sequence can be estimated by counting its frequency of occurence in a large collection of text (training data). Thereby, it is assumed that the occurrence of a word depends only on the previous $n$-1 words.

A fundamental problem that makes language modelling difficult is "dimensionality", i. e. the number of free parameters required to model the joint distribution of $n$ consecutive words with a given vocabulary size V. Usually, in large vocabulary continuous speech recognition (LVCSR) the size of vocabulary is 64k and $n$ is limited to 2 or 3 because of the computational complexity during decoding. That means, that many of the $(64k)^2$ bigrams and $(64k)^3$ trigrams are never observed during training. The central question is now how sequences of already seen words in the training corpus can be generalized to new sequences of words. A possible solution is to look at the probability predicted using a smaller context size as is done in back-off trigrams or using other smoothing techniques. Unfortunately, this approach has some weak points, because the size of context, which is taken into account, is no more than one or two words.

It is an objective of the invention to provide a method for recognizing speech, which leads to an improved recognition rate.

To achieve this objective, the invention provides a method for recognizing speech according to claim 1. In addition, the invention provides a speech processing system, a computer program product, and a computer readable storage medium as defined in claims 9, 10 and 11, respectively. Further features and preferred embodiments are respectively defined in respective subclaims and/or in the following description.

The method for recognizing speech according to the invention comprises the steps of receiving a speech input, generating a set of ordered hypotheses, wherein each hypothesis contains at least one hypothesis word, generating attribute information for at least one of said at least one hypothesis word, the attribute information being generated to be descriptive for syntactic and/or semantic information and/or the like of the respective hypothesis word, using a language model which is based on said attribute information to calculate word probabilities for said at least one of said at least one hypothesis word, which word probabilities are descriptive for the posterior probabilities of the respective hypothesis word given a plurality of previous hypothesis words, using said word probabilities for generating a set of re-ordered hypotheses, choosing at least one best hypothesis from said set of re-ordered hypotheses as a recognition result, outputting said recognition result.

In the following, the term language model is used for a language model, which is based on attribute information; it may therefore also be referred to as attribute language model. In the following, if a language model is meant, that is not based on attribute information, the term standard language model is used.

An advantage of using a language model, which is based on attribute information, is that information is used to calculate word probabilities, which is currently not used by standard language models. The language model will generalize because "similar words" will have a similar vector of attributes and because the joint probability function of word sequences, which is expressed in terms of these attribute vectors of the words in the sequence, is now a smooth one. This means, that a small change in an attribute will lead to a small change in the output probability. Generally speaking, the generalization is high because for unknown words the resulting probability functions are smooth functions of the word representation.

In attribute language modeling, the relations between words are captured by using attribute features that describe them. The joined probability function of word sequences is expressed in terms of attribute feature vectors of the respective words in the sequence. The attribute feature vectors are derived from the attribute information of the words. The language model probabilities for these words/sequences of words are very close because they are computed in the new space or in a reduced variant of the new space, which is defined by the attribute feature vectors. In the new space very similar vectors describe similar words. In this case the probability distributions are smooth functions and therefore the language model will generalize very well. In extreme cases each word is an attribute vector itself.

According to the invention, said attribute information may also be generated for a combination of hypothesis words, wherein the attribute information is descriptive for syntactic and/or semantic information and/or the like of said combination of hypothesis words. This way attribute information can be assigned to groups of words. This is e.g. important in dialogue systems, where frequently similar dialogues occur.

Preferably, said word probabilities are determined using a trainable probability estimator, in particular an artificial neural network. The advantage of using a trainable probability estimator is, that no smoothing or backing off techniques need to be applied.

Said artificial neural network may be a time delay neural network, a recurrent neural network or a multilayer perceptron network. By using recurrent and time delay neural networks, larger contexts can be modeled than in traditional n-gram language models. This is because the recurrence leads to an influence of many preceding inputs to the network.

Preferably, a feature vector is generated that is used as input for said trainable probability estimator, which feature vector contains the coded attribute information.

In a preferred embodiment, a method for dimensionality reduction is applied to the feature vector. This leads to a speed up of the training of the trainable probability estimator and also to a speed-up during application.

Said method for dimensionality reduction may be based on principal component analysis, latent semantic indexing, and/or random mapping projection.

According to the invention, it is also possible that a standard language model is applied additionally to said language model. This way, the attribute information is used additionally to standard language modelling.

A speech processing system according to the invention is capable of performing or realizing a method for recognizing speech as defined above and/or the steps thereof.

A computer program product according to the invention comprises computer program means adapted to perform and/or to realize the method for recognizing speech and/or the steps thereof, when it is executed on a computer, a digital signal processing means, and/or the like.

A computer readable storage medium according to the invention comprises a computer program product as defined above.

The invention and advantageous details thereof will be explained by way of an exemplatory embodiment thereof in the following with reference to the accompanying drawings in which

**Fig. 1** is a block diagram showing the main steps according to a first embodiment of the invention;

**Fig. 2** is a block diagram showing the steps according to a preferred embodiment of the invention; and

**Fig. 3** shows structures of a trainable probability estimator.

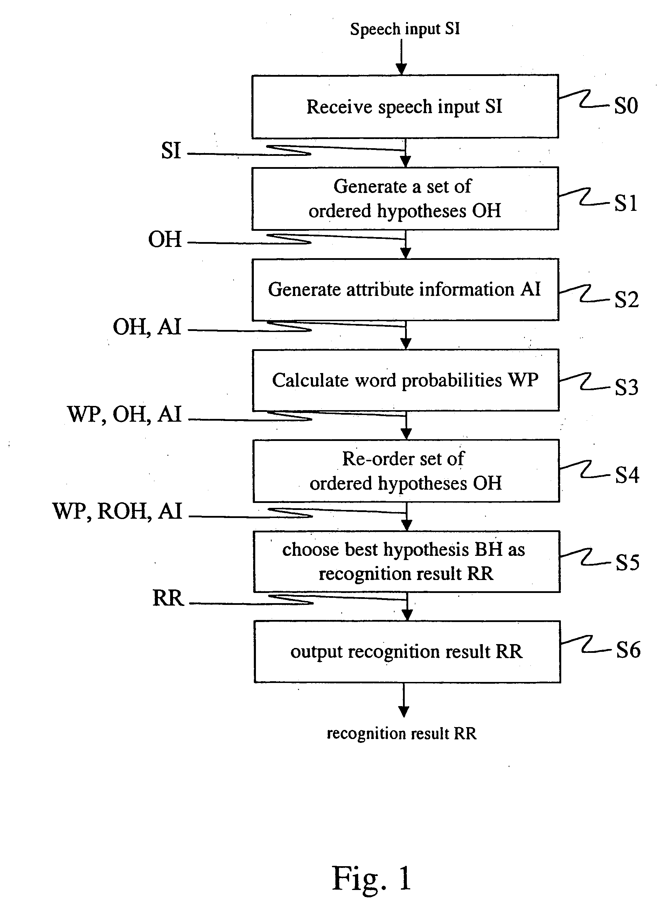

In Fig. 1, in an inputting step S0, a speech input SI is received. Then, in a hypotheses generating step S1, a set of ordered hypotheses OH is generated. Each hypothesis contains at least one hypothesis word. In the following "word" always refers to hypothesis word, if not otherwise stated.

For example the set of ordered hypotheses OH contains the following two hypotheses:

1. "Maria drinks cars."
2. "Maria drinks Coca Cola."

In a following attribute information generating step S2 attribute information is generated. Therefore, each word in the vocabulary is coded by using the most representative features/attributes that describe many particular aspects of it. Most representative means e.g. the features that best describe the semantic concept of a word.

For instance, for Coca Cola the attribute information captures the concept of beverage. The following attributes are associated with Coca Cola:

state of aggregation = liquid (out of liquid, solid, gas),

utility = drinking (out of eating, smelling, seeing, hearing, drinking),

color = black (out of white, black, red, yellow, blue, green, white).

...

syntactic category = noun (out of noun, verb, pronoun, ...).

Based on this attribute information AI a language model is determined. This language model is then used to calculate word probabilities. Word probabilities may be calculated for each hypothesis word of each hypothesis or may only be determined for some hypothesis words of some hypotheses. The word probability is defined as

$$P(w_i = k|a_{i-n+1}, ..., a_{i-2}, a_{i-1}, \forall k \in [1, N]). \tag{1}$$

In equation (1) N is the size of the vocabulary, and $w_i$ is a hypothesis word within a hypothesis. $a_{i-n+1}, ..., a_{i-2},$

$a_{i-1}$ represent the attribute information AI of the *n*-1 previous hypothesis words in the respective hypothesis. That means, that a certain attribute information $a_i$ is given as:

$$a_i = \{\text{state of aggregation, utility, color, ..., syntactic category}\} \tag{2}$$

In the example here, the attributes, i.e. "state of aggregation", "utility", "color", and "syntactic category", can assume values out of the following respective sets:

$$\text{state of aggregation} \in \{\text{liquid, solid, gas}\}$$

$$\text{utility} \in \{\text{eating, smelling, seeing, hearing, drinking}\}$$

$$\text{color} \in \{\text{white, black, red, yellow, blue, green, white}\}$$

$$...$$

$$\text{syntactic category} \in \{\text{noun, verb, pronoun, ...}\} \tag{3}$$

It should be noted at this point that the invention is likewise applicable if the language model is not causal. This means, that the attributes of following hypothesis words are considered when the word probabilities are determined. In this case eq. 1 is modified accordingly to incorporate attribute information from following words, i.e. a right context is used.

In Fig. 1 the word probabilities are calculated in a probability calculating step S3 according to equation (1). Then, in a re-ordering step S4 the word probabilities are used to re-order the set of ordered hypotheses OH. This leads to a set of re-ordered hypotheses ROH. In the example of above, by using the calculated word probabilities, it is found, that the second hypothesis, i. e. "Maria drinks Coca Cola" is more likely then the first hypothesis, i. e. "Maria drinks cars". As indicated above, the output of the re-ordering step S4 is a set of re-ordered hypotheses ROH. In the example the set of re-ordered hypotheses is:

1. "Maria drinks Coca Cola."
2. "Maria drinks cars."

In a choosing step S5 a best hypothesis BH is chosen as recognition result RR. Here, this is "Maria drinks Coca Cola". Then, in an outputting step S6 the recognition result is output.

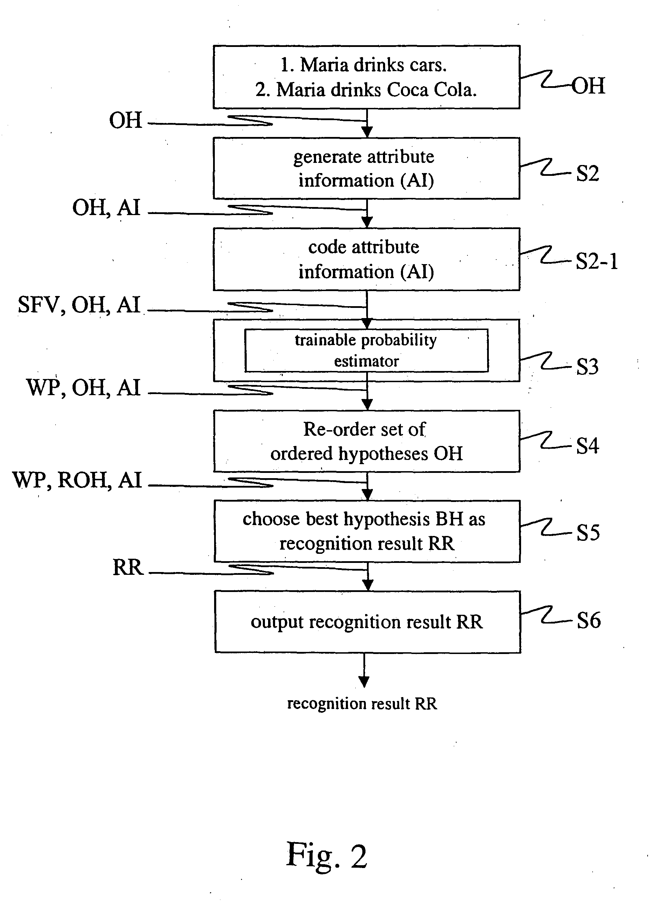

In the following, at hand of Fig. 2, the calculation of the word probabilities will be explained.

In Fig. 2 it is assumed that the inputting step S0, and the hypotheses generating step S1 have already been performed. Further, the same example as above is used for illustration.

In the attribute information generating step S2 of Fig. 2 the attribute information AI is determined as explained above, e.g. for Coca Cola it is:

$$\text{state of aggregation} = \text{liquid (out of liquid, solid, gas)},$$

$$\text{utility} = \text{drinking (out of eating, smelling, seeing, hearing, drinking)},$$

$$\text{color} = \text{black (out of white, black, red, yellow, blue, green, white)},$$

$$...$$

$$\text{syntactic category} = \text{noun (out of noun, verb, pronoun, ...)}.$$

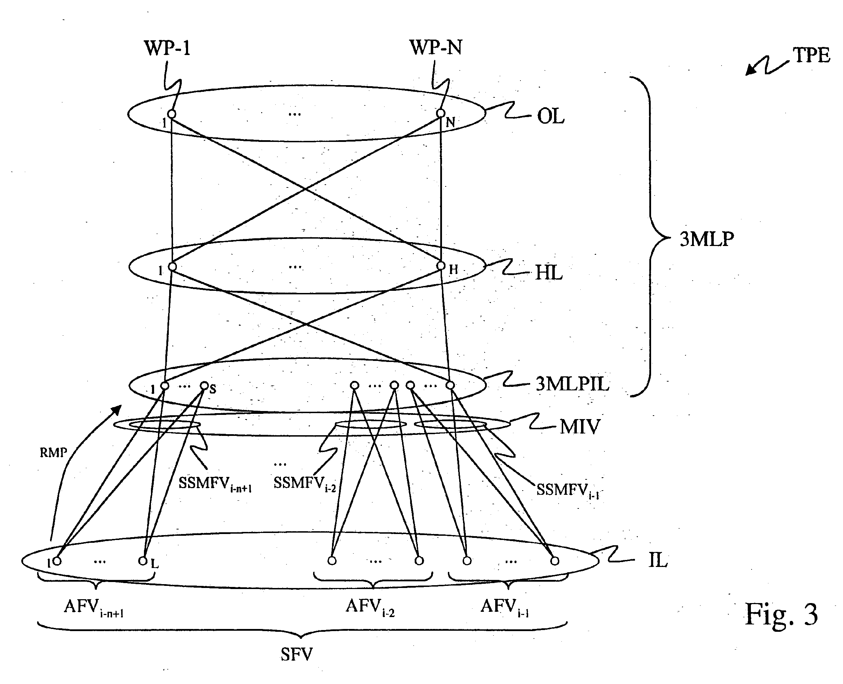

Then, in a coding step S2-1 the attribute information AI is coded, such that for each word a respective attribute feature vector AFV is determined (see also Fig. 3 explained below). The determination of the attribute feature vector AFV will be explained at hand of the example. For the word "Coca Cola" the corresponding attribute feature vector AFV looks like:

$$\text{Coca Cola} = (feature_1,\ feature_2,\ feature_3,\ ...\ feature_C). \hspace{2cm} [4]$$

Thereby C is the number of total attributes found in the vocabulary. A certain $feature_i$, i ∈ {1, ..., C}, is determined by coding a respective attribute with a 1-out-of-k code. Thereby k is the number of possible values of an attribute. E. g. the attribute "state of aggregation" has three possible values, i.e. "liquid", "solid", and "gas", therefore k = 3. Since Coca Cola has the value "liquid" of the attribute "state of aggregation", it follows that

$$feature_1\ (\text{state of aggregation}) = [1\ 0\ 0].$$

The value of the attribute "utility" is "drinking". Therefore it follows that

$$feature_2\ (\text{utility}) = [0\ 0\ 0\ 0\ 1]$$

$Feature_3$, ..., $Feature_C$ are determined accordingly:

$$feature_3\ (\text{colour}) = [0\ 1\ 0\ 0\ 0\ 0\ 0]$$

$$feafure_C\ (\text{syntactic category}) = [1\ 0\ 0\ 0\ ...\ 0]$$

Therefore, the attribute feature vector AFV of the word "Coca Cola" is

$$\text{AFV (Coca Cola)} = [100,\ 00001,\ 0100000,\ ...,\ 10000...0].$$

All attribute feature vectors AFV coded in this way have the same length L that depends on the number of attributes and the number of possible values of the respective attributes.

An attribute feature vector AFV is determined for several hypothesis words of a word window, i.e. a left and possibly right context, of consecutive hypothesis words of a hypothesis, leading to a feature vector FV. Here, in the example of Fig. 3 only a left context of n-1 words is used. Thus, the feature vector FV consists of the attribute feature vectors AFV of the n-1 preceding words, i.e. $AFV_{i-n+1}$, ..., $AFV_{i-2}$, $AFV_{i-1}$.

This feature vector FV is then, in the probability calculating step S3, used as an input for a trainable probability estimator TPE. The trainable probability estimator TPE represents 'the language model based on attribute information AI. In Fig. 2, after the probability calculating step S3, the same steps that have already been explained at hand of Fig. 1 follow, i. e. the re-ordering step S4, the choosing step S5, and the outputting step S6.

In a preferred embodiment of the invention the trainable probability estimator TPE is an artificial neural network. If the size of the vocabulary is N, then the artificial neural network ANN has N output neurons. Each output neuron is trained to output the posterior probability of the n-th word, given a certain feature vector FV.

If the size of an attribute feature vector AFV is relatively small, i.e. the attribute feature vector AFV has a reasonable dimension of 50 - 100, the feature vector FV may be used directly as input for the artificial neural network ANN. This is the case if the number of attributes and the number of respective values of the attributes is relatively small. However, if the dimension of the attribute feature vectors AFV is very high, which in turn leads to a high-dimensional feature vector FV, it is advantageously to apply a method for dimensionality reduction, like e.g. principal component analysis, latent semantic indexing, and/or random mapping projection RMP.

In Fig. 3 random mapping projection RMP is used for dimensionality reduction and the resulting mapped input vector MIV is used as input for a three-layered multilayer perceptron network 3MLP.

As can be seen in Fig. 3, the input for the trainable probability estimator TPE is the feature vector FV, which is generated as explained above. Therefore, the feature vector FV consists of n-1 attribute feature vectors $AFV_{i-n+1}$, ..., $AFV_{i-2}$, $AFV_{i-1}$. The random mapping projection RMP is now applied to each attribute feature vector AFV. As a result, small-sized mapped feature vectors $SSMFV_{i-n+1}$, ..., $SSMFV_{i-2}$, $SSMFV_{i-1}$ are obtained. It should be noted, that a method for dimensionality reduction may also be applied to the feature vector FV directly.

In Fig. 3, S denotes the size of the small-sized mapped feature vectors $SSMFV_{i-n+1}$, ..., $SSMFV_{i-2}$, $SSMFV_{i-1}$. Now, the n-1 small-sized mapped feature vectors are used as input for the three-layered multilayer perceptron network 3MLP in a three-layered multilayer perceptron network input layer 3MLPIL. The three-layered multilayer perceptron network 3MLP further consists of a hidden layer HL and an output layer OL. The hidden layer consists of H neurons. As already mentioned, the output layer OL contains N output neurons which are trained to output the word probabilities WP-1, ..., WP-N for each respective word of the vocabulary with the size N.

In the example of Fig. 3, the artificial neural network ANN is a standard fully connected multilayer perceptron network which is trained by e. g. a back propagation algorithm. However, neural networks with different topologies may be used, e. g. recurrent neural networks, whereby the number of hidden layers is equal to the number of contexts, trained by back propagation true time (BPTT).

It should be noted that using random mapping projection RMP, as in Fig. 3, has clear advantages regarding speed and efficiency. The random mapping projection RMP can be realized as simple look-up table, which is indexed by word and corresponding feature vectors. The speed is considerably increased since applying random mapping projection RMP considerably decreases the number of inputs for the neural network. Without applying random mapping projection RMP, the number of inputs for the neural network would be (n-1) x L. By applying random mapping projection RMP, the number of inputs for the neural network is (n-1) x S. Hereby, S is chosen to be much smaller than L, i.e. S << L. Since the input dimension for the three-layered multilayer perceptron network is much smaller by applying random mapping projection RMP, the training of the network is much faster, i. e. computational complexity is lower when applying random mapping projection RMP.

In the following further aspects of the invention are summarized.

The invention proposes a solution to capture the similarities of words in terms of their conceptual and grammatical meaning in order to increase the generalization power of language models. Further, the invention proposes a new way to generate a language model that takes into account the similarities between words derived as a priori knowledge relying on the attributes. These attributes are defined in such a way to represent a unit, where a unit can be a word or a sequence of words. The models achieved are based on artificial intelligence (multilayer-perceptron or Time Delay Neural Networks (TDNNs)) instead of statistic methods.

By using the attributes derived for all words in the vocabulary the similarity between words can be easily computed by any neural network classifier that uses the appropriate distance function. Generalization is obtained because a sequence of words that has never been seen before gets a high probability if it is made of words that are similar to words forming an already seen sentence.

Furthermore, by using TDNNs or Recurent Neural Networks (RNN) the size of context can be increased from two words to much more without increasing too much the number of free parameters, because the computation that has been done for a group of consecutive words, which can also be a phrase, does not need to be redone when the network input window is shifted to another group of words.

The type of neural network depends on the size of the mapped input and the ability to define similar attributes for more than one word. In case of using a multilayer perceptron the topology of the network would be like: The "input" layer represents the indices of the $n$-1 previous words in the vocabulary, $\omega_{i-n+1}, ..., \omega_{i-2}, \omega_{i-1}$ and the outputs neurons ($N$) compute the posterior probabilities for all words in the vocabulary:

$$P(w_i=k|\ \omega_{i-n+1}, ..., \omega_{i-2}, \omega_{i-1}, \forall k \in [1,N]).$$

This input layer is actually a look-up table (indexed by word and corresponding feature vector). The real input layer that is taken into account during the training algorithm consists of the mapping layer that has a number of neurons equal to (n-1)*$S$. The hidden layer consists of $H$ neurons.

In case of using RNNs, the topology is like: the same "input" level representing the index of n-1 previous words, (n-1) hidden layers each of them with $S$ neurons, and an output layer with $N$ neurons. In both cases the outputs of units are calculated using softmax normalization in order to obtain the posterior probabilities and cross-entropy as error function. The networks will learn the attribute vectors for each word (or sequence of words) and will estimate the $n$-gram probabilities.

In a LVCSR we can roughly summarize the steps required to output the most likely sequence of words:

1. acoustic modeling that outputs some alternative word sequences of hypothesis;
2. coding of each word in these hypothesis (mapping of words to sequences of corresponding features);
3. creating a look up table for the correspondence between index of word and feature vector;
4. feeding NN with these sequences of features;
5. using the output score of the neural network as posterior probabilities;
6. compute probability for word sequences derived at step 1 following the constraints by the step 5.

A main advantage of the invention is a better generalization based on similarity based on attributes between words in comparison with statistic models where this information is missing. This is possible because the system operates now on a continuous space (mapping) of words rather than a discrete one.

The invention allows a rapid adaptation to any new domain as long as the new words in the vocabulary have been associated with the corresponding attributes. No retraining step is required as long as the new words are not completely different from the existing ones in terms of the underlying attributes.

The size of vocabulary is not reduced even if it is of order of 64K like in word-class mapping, but improved by using mapping word-concepts that define the word. The attributes are unified in order to catch as much information as possible about that word. In this way the information about a word is not truncated to only one class but expanded to more classes that bring more semantic and statistic information. The network learns the in-word features distributions.

**Reference List**

| | |
|---|---|
| 3MLP | three-layered multilayer perceptron |
| 3MLPIL | three-layered multilayer perceptron network input layer |
| AFV | attribute feature vector |
| AI | attribute information |
| ANN | artificial neural network |
| BH | best hypothesis |
| FV | feature vector |
| H | number of hidden neurons |
| HL | hidden layer |
| IL | input layer |
| L | length of attribute feature vector AFV |
| MIV | mapped input vector |
| N | size of vocabulary |
| OH | set of ordered hypotheses |
| OL | output layer |
| RMP | random mapping projection |
| ROH | re-ordered hypotheses |
| RR | recognition result |
| S | size of small sized mapped feature vector SSMFV |
| S0 | inputting step |
| S1 | hypotheses generating step |
| S2 | attribute information generating step |
| S2-1 | coding step |
| S3 | probability calculating step |
| S4 | re-ordering step |
| S5 | choosing step |
| S6 | outputting step |
| SI | speech input |
| SSMFV | small sized mapped feature vector |
| TPE | trainable probability estimator |
| WP | word probabilities |
| WP-1, ..., WP-N | first to N-th word probability |

**Claims**

1. Method for recognizing speech,
comprising the steps of

 - receiving (S0) a speech input (SI),
 - generating (S1) a set of ordered hypotheses (OH), wherein each hypothesis contains at least one hypothesis word,
 - generating (S2) attribute information (AI) for at least one of said at least one hypothesis word, the attribute information being generated to be descriptive for syntactic and/or semantic information and/or the like of a respective hypothesis word,

- using (S3) a language model (LM) which is based on said attribute information (AI) to calculate word probabilities for said at least one of said at least one hypothesis word, which word probabilities are descriptive for the posterior probabilities of the respective hypothesis word given a plurality of previous hypothesis words,
- using (S4) said word probabilities for generating a set of re-ordered hypotheses (ROH),
- choosing (S5) at least one best hypothesis (BH) from said set of re-ordered hypotheses (ROH) as a recognition result (RR),
- outputting (S6) said recognition result.

2. The method according to claim 1,
**characterized by**
generating said attribute information (AI) for a combination of hypothesis words, wherein the attribute information (AI) is descriptive for syntactic and/or semantic information and/or the like of the combination of hypothesis words.

3. The method according to any one of the preceding claims,
**characterized in that**
said word probabilities are determined using a trainable probability estimator (TPE), in particular an artificial neural network (ANN).

4. The method according to claim 3,
**characterized in that**
said artificial neural network (ANN) is a time delay neural network, a recurrent neural network or a multilayer perceptron network.

5. The method according to claims 3 or 4,
**characterized by**
generating a feature vector (FV) that is used as input for said trainable probability estimator (TPE), which feature vector (FV) contains coded attribute information.

6. The method according to claim 5,
**characterized by**
applying a method for dimensionality reduction to the feature vector (FV).

7. The method according to claim 6,
**characterized in that**
said method for dimensionality reduction is based on principal component analysis, latent semantic indexing, and/or random mapping projection (RMP).

8. The method according to any one of the preceding claims,
**characterized in that**
a standard language model is applied additionally to said language model (LM).

9. Speech processing system,
which is capable of performing or realizing a method for recognizing speech according to any one of the preceding claims 1 to 8 and/or the steps thereof.

10. Computer program product,
comprising computer program means adapted to perform and/or to realize the method of recognizing speech according to any one of the claims 1 to 8 and/or the steps thereof, when it is executed on a computer, a digital signal processing means, and/or the like.

11. Computer readable storage medium,
comprising a computer program product according to claim 10.

Speech input SI

↓

| Receive speech input SI | ~ S0 |

SI ——

| Generate a set of ordered hypotheses OH | ~ S1 |

OH ——

| Generate attribute information AI | ~ S2 |

OH, AI ——

| Calculate word probabilities WP | ~ S3 |

WP, OH, AI ——

| Re-order set of ordered hypotheses OH | ~ S4 |

WP, ROH, AI ——

| choose best hypothesis BH as recognition result RR | ~ S5 |

RR ——

| output recognition result RR | ~ S6 |

↓

recognition result RR

# Fig. 1

OH ─╮

| 1. Maria drinks cars.<br>2. Maria drinks Coca Cola. | ─ OH |

OH ──⊲

| generate attribute<br>information (AI) | ─ S2 |

OH, AI ──⊲

| code attribute<br>information (AI) | ─ S2-1 |

SFV, OH, AI ──⊲

| trainable probability<br>estimator | ─ S3 |

WP, OH, AI ──⊲

| Re-order set of<br>ordered hypotheses OH | ─ S4 |

WP, ROH, AI ──⊲

| choose best hypothesis BH as<br>recognition result RR | ─ S5 |

RR ──⊲

| output recognition result RR | ─ S6 |

recognition result RR

# Fig. 2

Fig. 3

**European Patent Office**

## EUROPEAN SEARCH REPORT

Application Number

EP 03 00 3876

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/087315 A1 (LEE ET AL) 4 July 2002 (2002-07-04) * abstract; figures 1,2,4,7,9 * * paragraphs [0003],[0005],[0027],[0034] * --- | 1-11 | G10L15/18 G10L15/16 |
| X | WO 01 26092 A (LERNOUT & HAUSPIE SPEECHPROD) 12 April 2001 (2001-04-12) * abstract * * page 3, line 11-21 * * claims 8,15,16 * --- | 1,2,8-11 | |
| X | WO 03 001504 A (ESTIVAL DOMINIQUE ;HUTCHISON BEN (AU); KAZ GROUP LTD (AU)) 3 January 2003 (2003-01-03) * page 1, line 25 - page 4, line 4 * --- | 1,2,8-11 | |
| X | WO 99 14740 A (HOEGE HARALD ;SIEMENS AG (DE); WITSCHEL PETRA (DE)) 25 March 1999 (1999-03-25) * abstract; figure 2 * * page 2, table 1 * * page 4, tables 2, 3 * --- | 1,2,8-11 | |
| A | SAN-SEGUNDO R ET AL: "Confidence measures for dialogue management in the CU communicator system" 2000 IEEE INTERNATIONAL CONFERENCE ON ACOUSTICS, SPEECH, AND SIGNAL PROCESSING. PROCEEDINGS (CAT. NO.00CH37100) , vol. 2, 5 - 9 June 2000, pages 1237-1240, XP010504953 Istanbul, Turkey * abstract * * section "4.2 Multi-layer perceptron context model" * --- -/-- | 1-5,8-11 | TECHNICAL FIELDS SEARCHED (Int.Cl.7) G10L |

The present search report has been drawn up for all claims

| Place of search | Date of completion of the search | Examiner |
|---|---|---|
| THE HAGUE | 28 July 2003 | Quélavoine, R |

**European Patent Office**

## EUROPEAN SEARCH REPORT

Application Number

EP 03 00 3876

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HIDEFUMI SAWAI: "THE TDNN-LR LARGE-VOCABULARY AND CONTINUOUS SPEECH RECOGNITION SYSTEM" PROCEEDINGS OF THE INTERNATIONAL CONFERENCE ON SPOKEN LANGUAGE PROCESSING (ICSLP). KOBE, NOV. 18 -22, 1990, TOKYO, ASJ, JP, vol. 2, 18 November 1990 (1990-11-18), pages 1349-1352, XP000506999 * abstract; figure 1 * | 3-7 | |
| A | CHAUG-CHING HUANG ET AL: "A MANDARIN SPEECH DICTATION SYSTEM BASED ON NEURAL NETWORK AND LANGUAGE PROCESSING MODEL" IEEE TRANSACTIONS ON CONSUMER ELECTRONICS, IEEE INC. NEW YORK, US, vol. 40, no. 3, 1 August 1994 (1994-08-01), pages 437-445, XP000471204 ISSN: 0098-3063 * abstract; figures 1-3 * | 1-11 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 28 July 2003 | Quélavoine, R |

EPO FORM 1503 03.82 (P04C01)

**ANNEX TO THE EUROPEAN SEARCH REPORT
ON EUROPEAN PATENT APPLICATION NO.**  EP 03 00 3876

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2003

| Patent document cited in search report | | Publication date | Patent family member(s) | | Publication date |
|---|---|---|---|---|---|
| US 2002087315 | A1 | 04-07-2002 | WO | 02054033 A2 | 11-07-2002 |
| | | | WO | 02054384 A1 | 11-07-2002 |
| | | | WO | 02054385 A1 | 11-07-2002 |
| | | | US | 2002087320 A1 | 04-07-2002 |
| | | | US | 2002087325 A1 | 04-07-2002 |
| | | | US | 2002087326 A1 | 04-07-2002 |
| | | | US | 2002087310 A1 | 04-07-2002 |
| | | | US | 2002087327 A1 | 04-07-2002 |
| | | | US | 2002087311 A1 | 04-07-2002 |
| | | | US | 2002087316 A1 | 04-07-2002 |
| | | | US | 2002087313 A1 | 04-07-2002 |
| | | | US | 2002087312 A1 | 04-07-2002 |
| | | | US | 2002087306 A1 | 04-07-2002 |
| | | | US | 2002087307 A1 | 04-07-2002 |
| | | | US | 2002087317 A1 | 04-07-2002 |
| | | | US | 2002087309 A1 | 04-07-2002 |
| WO 0126092 | A | 12-04-2001 | AU | 7938300 A | 10-05-2001 |
| | | | WO | 0126092 A2 | 12-04-2001 |
| WO 03001504 | A | 03-01-2003 | WO | 03001504 A1 | 03-01-2003 |
| WO 9914740 | A | 25-03-1999 | CN | 1111841 B | 18-06-2003 |
| | | | WO | 9914740 A1 | 25-03-1999 |
| | | | DE | 59800737 D1 | 21-06-2001 |
| | | | EP | 1016077 A1 | 05-07-2000 |
| | | | ES | 2158702 T3 | 01-09-2001 |
| | | | JP | 2001516903 T | 02-10-2001 |